# EUROPEAN PATENT APPLICATION

(11) **EP 2 661 065 A1**
(43) Date of publication of application: **06.11.2013**
(21) Application number: 13165497.2
(22) Date of filing: 26.04.2013
(51) Int. Cl.: H04M 3/42, H04M 3/487, G06Q 30/02

(54) **Network nodes providing pre-call and during call advertising**

(30) Priority: 01.05.2012 US 201213461535
(71) Applicant: Telefonaktiebolaget L M Ericsson AB (Publ), 164 83 Stockholm (SE)
(72) Inventor: Xing, Bo, Fremont, CA California 94555 (US); Wang, Yi-Pin Eric, Fremont, CA California 94539 (US); Hui, Dennis, Sunnyvale, CA California 94087 (US)
(74) Representative: Rees, Simon John Lewis

(57) **Abstract**

Targeted advertising during the alerting phase of a voice call. Targeting is based on both subscribers' demographic profiles (caller and called), location of both subscribers, web-browsing history, call history and information from social networks. Video advertisements briefly discussed. Essentially, this is a telecom operator centric implementation of the ring-back-tone replacement service: the telecom operator node sniffs all information available to it (biographical, address, pattern of consumption, internet sites viewed, calls made and received, social network) and provides, when a call is requested, all this information to an advertisement server through a HTTP REST API call; the advertisement center runs a matching algorithm and returns the pointers to the resulting adverts to the telecom operator's node, which sequentially downloads the pointed out adverts while playing them to the caller during alert.

## Description

### TECHNICAL FIELD

The present disclosure relates to the telecommunication systems and related user equipment, and further relates to providing advertising through telecommunication systems.

### BACKGROUND

Telecommunications (telecom) operators are continuously seeking new revenue streams in both traditional businesses like fixed-line/mobile voice calling and newer businesses like Internet services. However, subscribers have become accustomed to obtaining free services through the Internet, such as those provided by Google, Facebook and Skype. Subscribers are increasingly transferring their Internet experience into an expectation for obtaining free or low cost voice calling from their landline and mobile phones.

Telecom operators possess valuable assets, such as subscriber data base, including age, gender, address, call history, etc. They therefore have a knowledge base that can be used to deliver advisements that match subscriber interests. Furthermore, as connectivity providers, telecom operators own the data pipe, and thus they have ability to deliver messages and advertisements to subscriber devices. Such advertising potentially could subsidize the cost for voice calls and become a new revenue point for telecom operators. One challenge though is to provide advertising in a flexible way that can be customized to satisfy desires of telecom operators and their subscribers.

The approaches and concepts described in this section could be pursued, but are not necessarily what have been previously conceived or pursued. Therefore, unless otherwise indicated herein, the approaches and concepts described in this section are not prior art to the claims in this application and are not admitted to be prior art by inclusion in this section.

### SUMMARY

It is therefore an object of one or more embodiments herein to address at least some of the above mentioned disadvantages and/or to enable telecommunications operators to generate revenue by providing various apparatuses and methods for providing advertisements to user terminals.

Some embodiments are directed to a voice call network node that communicates advertisements to user terminals of a telecommunications system. The voice call network node includes a voice call handling component and an advertisement insertion component. The voice call handling component responds to a voice call from a caller user terminal by identifying characteristics of the caller user terminal and/or the callee user terminal. The advertisement insertion component communicates voice call profile information through a network to an advertisement service offering node. The voice call profile information identifies characteristics of the caller user terminal and/or the callee user terminal. The advertisement insertion component also receives an advertisement from the advertisement service offering node responsive to the communicated voice call profile information, and communicates the advertisement to the caller user terminal and/or to the callee user terminal.

In some further embodiments, the advertisement insertion component may communicate the voice call profile information to the advertisement service offering node using an HTTP Representational State Transfer Application Programming Interface (HTTP REST API) of the advertisement service offering node. The advertisement insertion component may communicate the advertisement to the caller user terminal by playing an audio portion of the advertisement through a voice channel connection to the caller user terminal while the callee user terminal is being called, and cease playing the audio portion of the advertisement to the caller user terminal in response to the callee user terminal answering the voice call.

Some other embodiments are directed to an advertisement service offering node that provides advertisements to voice call network nodes of a telecommunications system. The advertisement service offering node includes a repository of advertisements, and an advertisement matching engine that receives voice call profile information from a voice call network node that identifies characteristics of a caller user terminal and/or a callee user terminal, uses the voice call profile information to identify at least one matching advertisement in the repository, and communicates the at least one matching advertisement to the voice call network node.

Some other embodiments are directed to a user terminal that provides advertisements to users. The user terminal includes a communication interface that establishes voice calls through a voice call network node to callee user terminals of a telecommunications system. A processor circuit initiates a voice call to a callee user terminal, receives an advertisement from the voice call network node responsive to initiation of the voice call, and communicates the advertisement to a user.

In some further embodiments, the processor circuit receives a picture and/or a video as the advertisement from the voice call network node, and displays the picture and/or the video on a display device.

Other voice call network nodes, advertisement service offering nodes, user terminals, and/or methods according to embodiments of the invention will be or become apparent to one with skill in the art upon review of the following drawings and detailed description. It is intended that all such additional voice call network nodes, advertisement service offering nodes, user terminals, and/or methods be included within this description, be within the scope of the present invention, and be protected by the accompanying claims. Moreover, it is intended that all embodiments disclosed herein can be implemented separately or combined in any way and/or combination.

### BRIEF DESCRIPTION OF THE DRAWINGS

The accompanying drawings, which are included to provide a further understanding of the disclosure and are incorporated in and constitute a part of this application, illustrate certain non-limiting embodiment(s) of the invention. In the drawings:

Figure 1 is a block diagram that illustrates a telecommunications system that includes a voice call network node and an advertisement service offering node that are configured to provide advertisements to user terminals according to some embodiments;

Figure 2 is a data flow diagram that illustrates operations and methods that can be performed by user terminals, the voice call network node, and the advertisement service offering node of Figure 1 according to some embodiments;

Figures 3-10 are flowcharts that illustrate various example operations and methods by the voice call network node of Figure 1 according to some embodiments;

Figures 11-15 are flowcharts that illustrate various example operations and methods by the advertisement service offering node of Figure 1 according to some embodiments;

Figures 16-21 are flowcharts that illustrate various example operations and methods by a user terminal of Figure 1 according to some embodiments; and

Figure 22 is a block diagram of a network node that may be included in the user terminals, the voice call network node, and/or the advertisement service offering node of Figure 1 according to some embodiments.

### DETAILED DESCRIPTION

The invention will now be described more fully hereinafter with reference to the accompanying drawings, in which embodiments of the invention are shown. This invention may, however, be embodied in many different forms and is not to be construed as limited to the embodiments set forth herein.

During a voice call, there are a number of waiting periods. A pre-dialing waiting period occurs while a user enters individual numerical digits of a telephone number for a callee UE (called party UE). A pre-call waiting period occurs after the caller UE completes the dialing and until the call is routed through to the callee UE (called party UE) and the associated user answers the call. An in-call waiting period occurs after the callee UE answers the call.

In accordance with various embodiments disclosed herein, a telecommunications system is configured to provide advertisements to the caller UE and/or the callee UE during one or more of these waiting periods. Telecommunications (telecom) operators can use the advertisements as a way to increase their monetization of voice calls and may thereby, for example, provide lower cost or free voice call services for UEs, such as landline and/or mobile telephones.

Moreover, telecom operators can leverage their knowledge about callers and callees to provide targeted and/or personalized advertisements that can be more beneficial or valuable to advertisers and/or the advertisement receivers.

### Example Telecommunications System Providing Advertisements to User Terminals

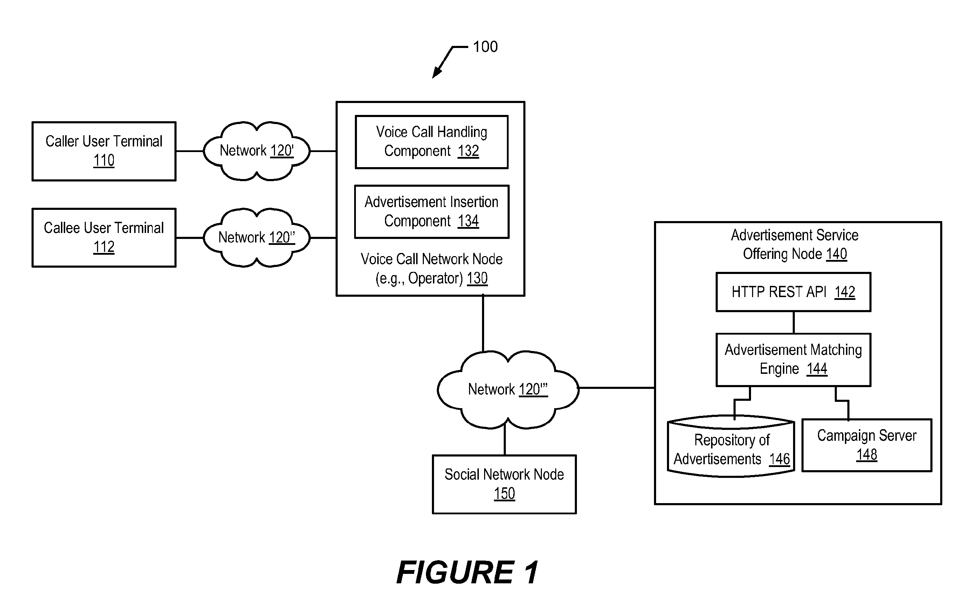

Figure 1 is a block diagram that illustrates a telecommunications system 100 that includes a voice call network node 130 and an advertisement service offering node 140 that are configured to provide advertisements to user terminals according to some embodiments. Although a single interconnected voice call network node 130 and advertisement service offering node 140 have been illustrated for ease of illustration and explanation, is to be understood that any number of interconnected nodes 130,140 can be used and the respective functionality described herein may be spread across more and other types of network nodes.

The voice call network node 130 may correspond to a telecom operator who provides telecommunications services through one or more networks 120',120" to subscriber user terminals 110,112. In the example of Figure 1, a user can make a voice call to the callee user terminal 112 from the caller user terminal 110 by dialing the telephone number of the callee user terminal 112. A voice call handling component 132 of the voice call network node 130 receives the telephone number digits from the caller user terminal 110, routes the call through the networks 120',120" (e.g., a public switched telephone network, Internet, radio access network, and/or other network) to the callee user terminal 112, and responds to a user of the callee user terminal 112 answering the call by interconnecting the caller user terminal 110 and callee user terminal 112 to establish the voice call therebetween.

The voice call network node 130 may provide services to user terminals through public networks (e.g., Internet) and/or private networks that may include wired and/or radio access network connections to the user terminals. The radio access network may include cellular radio access technology systems, such as Global Standard for Mobile (GSM) communication, General Packet Radio Service (GPRS), enhanced data rates for GSM evolution (EDGE), code division multiple access (CDMA), Universal Mobile Telecommunications System (UMTS), and/or 3GPP LTE (3rd Generation Partnership Project Long Term Evolution). The Radio access networks may alternatively or additional communicate with one or more of the UEs through a Wireless Local Area Network (i.e., IEEE 802.11) interface, WiMAX, and/or another radio access technology.

In accordance with some embodiments, the voice call network node 130 also includes an advertisement insertion component 134 that obtains advertisements from an advertisement service offering node 140 and provides advertising to user terminals, such as during the pre-dialing waiting period, the pre-call waiting period, and/or the in-call waiting period. The advertisement service offering node 140 may access advertisements through a Service as a Software (SaaS) cloud service from the advertisement service offering node 140 via a network 120"' (e.g., public/private network). The advertisement insertion component 134 may provide voice call profile information containing characteristics of the caller user terminal 110 and/or the callee user terminal 112 to the advertisement service offering node 140 via an HTTP Representational State Transfer Application Programming Interface (HTTP REST API) 142 or other interface.

The advertisement service offering node 140 can include a repository of advertisements 146 and an advertisement matching engine 144, and may further include a campaign server 148.

The repository of advertisements 146 contains audio advertisements, picture advertisements, video advertisements, and/or multimedia advertisements, along with associated metadata that describes characteristics of the advertisements. For example, the metadata may identify business names, business locations, business types, product types, competitors, relevant products, and/or other attributes that are desired to be associated with the stored advertisements. The metadata need not be static, but instead may be dynamically updated to reflect, for example, changes in the location of business associated with advertisements. Thus, the present location(s) of taxi cabs operated by a business associated with one or more advertisements may be updated responsive to defined events associated with the taxi cabs, as described in further detail below.

The advertisement matching engine 144 contains algorithms that identify one or more advertisements in the repository 146 that match information received from the advertisement insertion component 134, such as characteristics of the caller user terminal 110 and/or the callee user terminal 112. The matching may be performed by a computer implemented algorithm that generates matching scores for the advertisements based on the metadata and the information received from the advertisement insertion component 134, and, for example, selects the advertisement having the best matching score or selects a plurality of advertisements having matching scores satisfying a defined criteria.

The campaign server 148 stores advertisers' information that is used to provide (e.g., bias) ordering for a list of advertisements to be provided to the advertisement insertion component 134. The advertisers' information may include static information, such as an advertiser's enrollment type (or membership level based on fee payment, such as platinum, gold, silver, etc.), as well as dynamically updated information such as a promotional campaign from an advertiser for a specific period of time and/or for a particular geographic region which may change over time (e.g., as a taxi driver travels). The campaign server 148 may, for example, control: 1) which advertisements are to be provided based on time criticalness defined for advertisements in the repository 146 and/or relative priorities of advertisements in the repository 146; 2) how many advertisements are to be provided to the advertisement insertion component 134; 3) rate at which particular advertisements are to be repeatedly provided to the advertisement insertion component 134; 4) times of day and/or days of week when particular advertisements are to be provided to the advertisement insertion component 134; and/or 5) characteristics of advertisements (e.g., particular advertiser brands and/or content advertisement campaigns) that are to be provided to the advertisement insertion component 134.

For example, the campaign server 148 can be dynamically updated to prioritize delivery of advertisements that will expire soon. Accordingly, the repository of advertisements 146 can also be dynamically updated to generate audio/image/video advertisements for transient services offered by businesses. Some operations that can be provided by the advertisement service offering node 140 are explained through the following non-limiting illustrative examples.

A San Francisco based taxi driver just finishing a trip from San Francisco to San Jose and desires to give a 10-15% discount to potential customers in San Jose looking for a ride to San Francisco. The taxi driver contacts an advertising operator who sets up a real-time short-duration offered advertisement to be provided by the advertisement service offering node 140, and pays for the advertisement. The advertising operator generates the advertisement on the fly or selectively retrieves one or more defined advertisement, adds the advertisement to the repository 146 and the criteria of the offering to the campaign server 148. The advertisement is then provided to the advertisement insertion component 134 for communication to a user of the caller user terminal 110 responsive to voice call profile information associated with the caller user terminal 110 that indicates that the caller user terminal 110 is proximately located to San Jose and is calling a callee user terminal 112 that is associated with a taxi business service.

Similarly, a hotel located near a particular highway has empty rooms after 8 pm and desires to give a 30% discount for the night to callers who are attempting to call other hotels in the vicinity. The hotel owner/manager contacts the advertising operator who sets up a real-time advertisement to be provided by the advertisement service offering node 140, and pays for the advertisement. The advertising operator generates the advertisement on the fly or selectively retrieves one or more defined advertisement, adds the advertisement to the repository 146 and the criteria of the offering to the campaign server 148. The advertisement is then provided to the advertisement insertion component 134 responsive to voice call profile information that indicates that a caller user terminal 110 is calling a callee user terminal 112 that is associated with a hotel business located within a threshold distance of the hotel that placed the advertisement. When multiple hotels have paid for advertisements for similar advertisement services, one or more advertisements of one or more hotels providing the best/threshold offers or that have paid the highest or at least a threshold premium can be provided to the advertisement insertion component 134 for communication to a user of the caller user terminal 110.

### Operations and Methods For Providing Advertisements to User Terminals

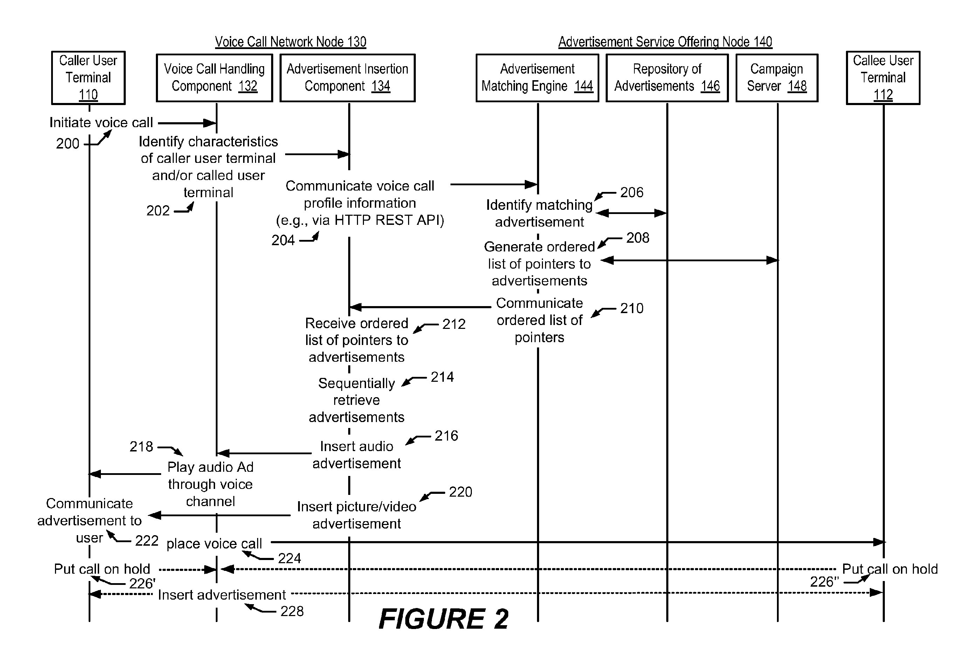

Various operations and methods that can be performed by the voice call network node 130 and the advertisement service offering node 140 to provide advertisements to the user terminals 110,112 are described below with regard to the data flow diagram and flowcharts of Figures 2-21. The operations and methods illustrated and described with regard to the data flow diagram and flowcharts can be used separately or any two or more of which can be combined in accordance to provide various embodiments.

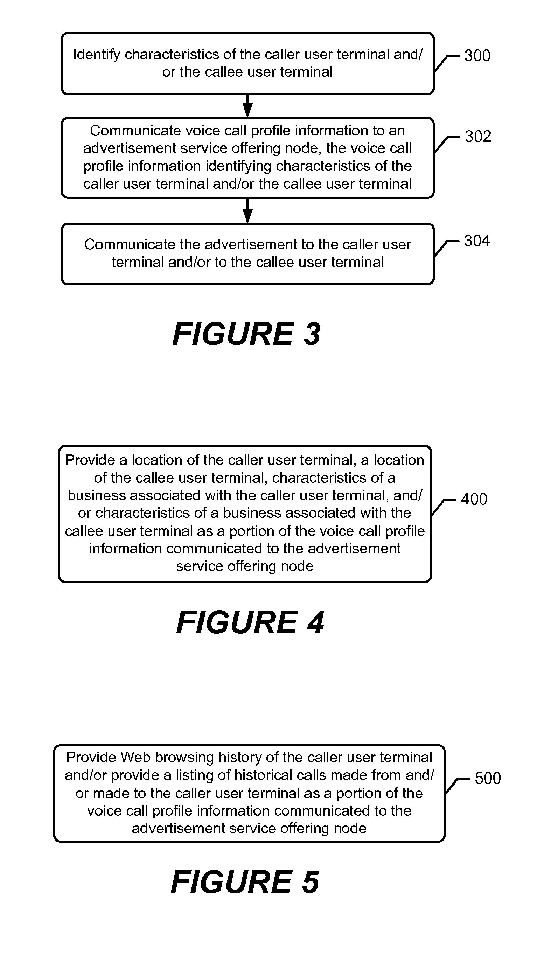

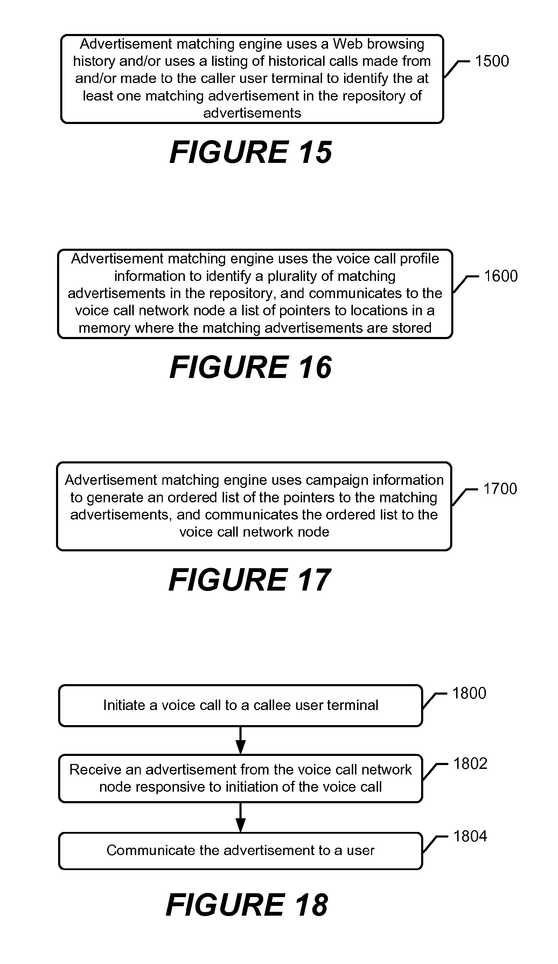

Referring to figure 2, a user operates a caller user terminal 110 to initiate (200 of Figure 2, 1800 of Figure 18) a voice call to a callee user terminal 112. The voice call handling component 132 responds to the voice call by identifying (202 of Figure 2, 300 of Figure 3) characteristics of the caller user terminal 110 and/or the callee user terminal 112. The advertisement insertion component 134 communicates (204 of Figure 2, 302 of Figure 3) voice call profile information through a network (120"' of Figure 1) to an advertisement service offering node 140. The voice call profile information identifies characteristics of the caller user terminal 110 and/or the callee user terminal 112.

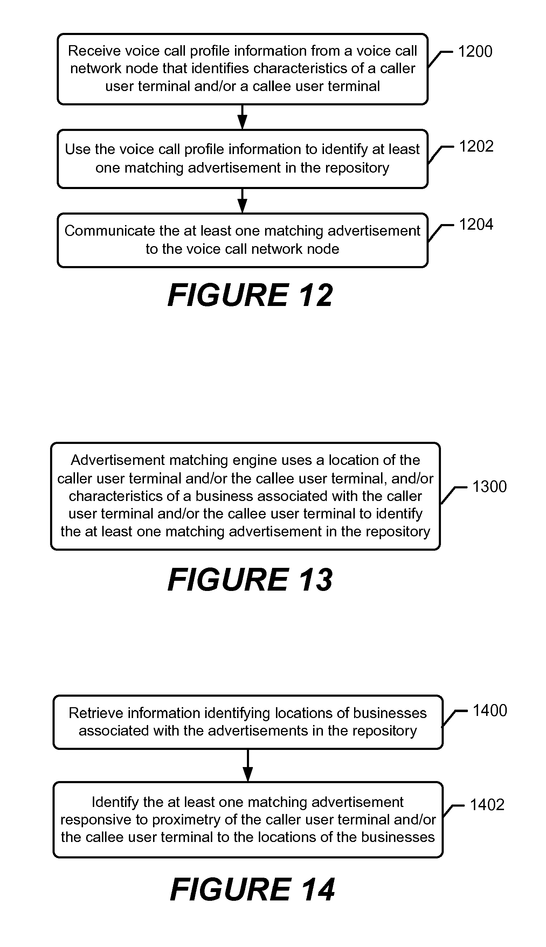

The advertisement matching engine 144 of the advertisement service offering node 140 receives (1200 of Figure 12) the voice call profile information from the voice call network node 130. The advertisement matching engine 144 uses the voice call profile information to identify (206 of Figure 2, 1202 of Figure 12) at least one matching advertisement in the repository 146, and communicates (210 of Figure 2, 1204 of Figure 12) the at least one matching advertisement to the voice call network node 130. The advertisement matching engine 144 may, for example, identify characteristics of a business associated with called telephone number to identify matching advertisements in the repository 146 that are associated with competitor businesses or other businesses having complementary products/services. As explained above, the advertisement insertion component 134 may communicate the voice call profile information through a HTTP REST API 142 of the advertisement service offering node 140.

The advertisement insertion component 134 of the voice call network node 130 communicates (216 and 220 of Figure 2, 304 of Figure 3) the advertisement to the caller user terminal 110 and/or to the callee user terminal 112.

The caller user terminal 110 receives (1802 of Figure 18) the advertisement from the voice call network node 130 responsive to initiation of the voice call, and communicates (222 of Figure 2, 1804 of Figure 18) the advertisement to a user. The callee user terminal 112 can be similarly configured to receive an advertisement from the voice call network node 130 and communicate the advertisement to a user.

The voice call network node 130 can use various known characteristics of the caller/callee user terminals 110, 112 to fetch relevant advertisements from the advertisement service offering node 140. The voice call network node 130 may include a repository of subscriber information and directory of businesses, services, and products, including telephone numbers, mailing addresses, etc, that can be accessed to lookup information that can be relevant to the selection of advertisements and, therefore, included in the voice call profile information provided to the advertisement service offering node 140.

For example, the advertisement insertion component 134 can provide (204 of Figure 2, 400 of Figure 4) a location of the caller user terminal 110, a location of the callee user terminal 112, characteristics of a business associated with the caller user terminal 110, and/or characteristics of a business associated with the callee user terminal 112 as a portion of the voice call profile information that it communicates (204 of Figure 2, 302 of Figure 3) to the advertisement service offering node 140. Locations of the caller/callee user terminals 110 may be determined based on mailing addresses recorded in a subscriber information repository or may be determined using mobile terminal positioning techniques (e.g. GPS, cell ID, or other techniques performed by a user terminal and/or a radio communications network).

The advertisement matching engine 144 can then use the location of the caller user terminal 110, the location of the callee user terminal 112, characteristics of a business associated with the caller user terminal 110, and/or characteristics of a business associated with the callee user terminal 112, which is received as a portion of the voice call profile information, to identify (206 of Figure 2, 1300 of Figure 13) the at least one matching advertisement in the repository 146. The advertisement matching engine 144 may retrieve (1400 of Figure 14) information identifying locations of businesses associated with the advertisements in the repository (e.g., from metadata associated with the advertisements), and identify (1402 of Figure 14) the at least one matching advertisement responsive to proximetry of the caller user terminal 110 and/or the callee user terminal 112 to the locations of the businesses.

The advertisement matching engine 144 may, for example, uses characteristics of a business associated with the caller user terminal 110 and/or the callee terminal 112 to identify matching advertisements in the repository 146 that are associated with competitor businesses or other businesses having complementary products/services. For example, when the callee is a business, the engine 144 may select advertisements associated with the callee competitor businesses in the callee's area and/or the caller's area. In contrast, when the callee is an individual, the engine 144 may select advertisements associated with businesses that are similar to one that the callee is presently calling and/or ones that the callee has recently called.

In another example, the advertisement insertion component 134 provides (204 of Figure 2, 500 of Figure 5) a Web browsing history of the caller user terminal 110 and/or provides a listing of historical calls made from and/or made to the caller user terminal 110 as a portion of the voice call profile information communicated to the advertisement service offering node 140. The advertisement matching engine 144 uses (206 of Figure 2, 1500 of Figure 15) the Web browsing history and/or a listing of historical calls made from and/or made to the caller user terminal 110, which is received as a portion of the voice call profile information, to identify the at least one matching advertisement in the repository of advertisements.

Accordingly, the advertisement insertion component 134 and/or another network node of the telecommunications system 100 can maintain a Web browsing history for user terminals, and use the Web browsing history to retrieve advertisements that are relevant to information provided by the Web browsing history. The advertisement matching engine 144 may, for example, identify characteristics of a business associated with Web addresses contained in the Web browsing history to identify advertisements associated with competitor businesses or other businesses having complementary products/services, which are provided to the respective user terminals.

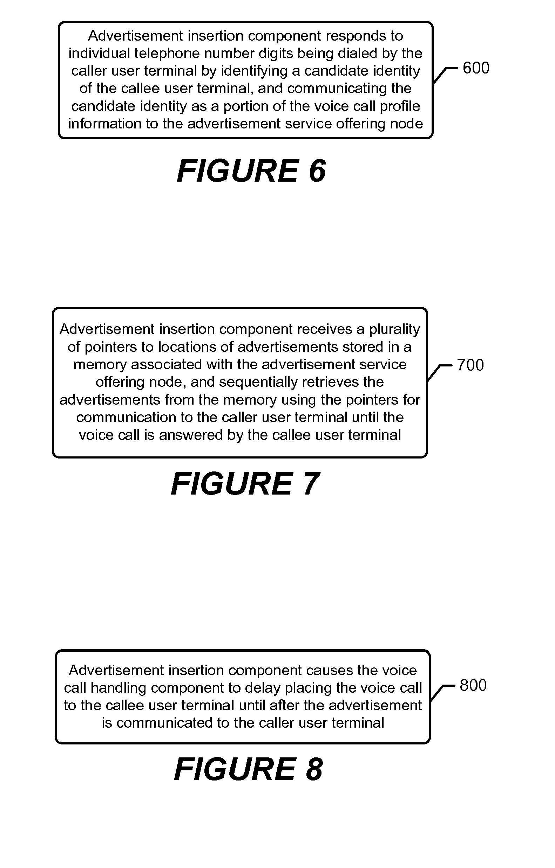

In another example, the advertisement insertion component 134 responds (202 of Figure 2, 600 of Figure 6) to individual telephone number digits being dialed by the caller user terminal 110 by identifying a candidate identity of the callee user terminal 112, and communicating the candidate identity as a portion of the voice call profile information to the advertisement service offering node 140 so that a responsive advertisement is received from the advertisement service offering node 140 for communication to the caller user terminal 110. Thus, as a user dials individual digits of a telephone number, the advertisement insertion component 134 can predict who is being called or at least relevant characteristics of who is being called (e.g., location associated with a telephone country code or regional area code) and fetch a targeted advertisement that can be communicated to the user while the telephone number is being dialed or soon thereafter.

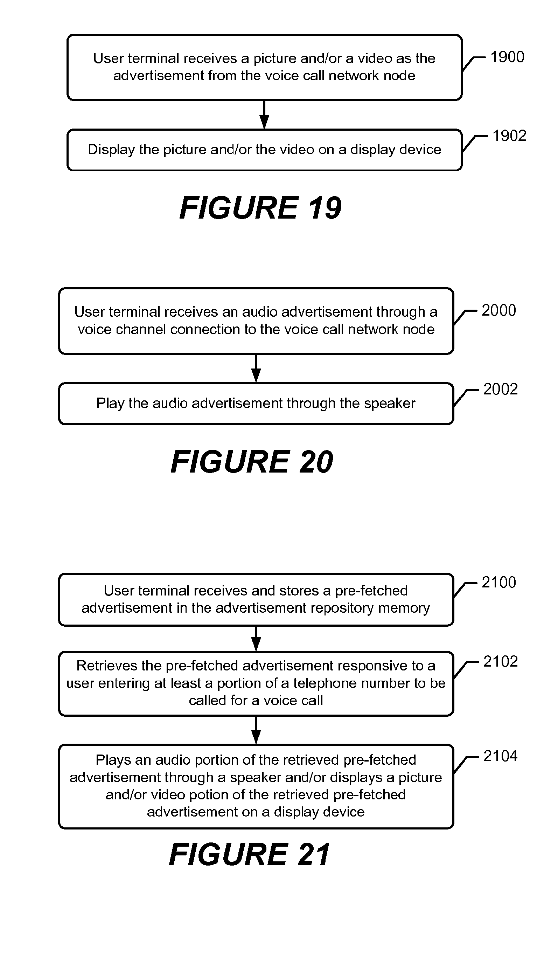

In another embodiment, the caller user terminal 110 can locally store and retrieve advertisements that can be played to a user during the pre-dialing waiting period and/or pre-call waiting period. For example, the caller user terminal 110 can include an advertisement repository memory (one or more digital memories), and processor circuit that receives, from the voice call network node 130, and stores (2100 of Figure 21) a pre-fetched advertisement in the advertisement repository memory. The processor circuit retrieves (2102 of Figure 21) the pre-fetched advertisement responsive to a user entering at least a portion of a telephone number to be called for a voice call. The processor circuit plays (2104 of Figure 21) an audio portion of the retrieved pre-fetched advertisement through a speaker and/or displays a picture and/or video potion of the retrieved pre-fetched advertisement on a display device.

Although some embodiments are described in the context of the selecting and providing a single advertisement to the caller/callee user terminal, other embodiments select and provide a plurality of advertisements thereto. For example, the advertisement matching engine 144 uses the voice call profile information to identify (206 of Figure 2, 1600 of Figure 16) a plurality of matching advertisements in the repository 146, and communicate (210 of Figure 2) to the voice call network node 130 a list of pointers to locations in a memory (e.g., repository 146) where the matching advertisements are stored. The advertisement insertion component 134 receives (212 of Figure 2) the list of pointers, and sequentially retrieves (214 of Figure 2) the advertisements from the memory (e.g., repository 146) of the advertisement service offering node 140 using the pointers for communication (216/220 of Figure 2) to the caller user terminal 110 until the voice call is answered by the callee user terminal 112.

As explained above, the advertisement service offering node 140 can arrange the ordering of advertisements in the listing provided to the caller/callee user terminals responsive to campaign information provided by the campaign server 148. The campaign information may, for example, identify time criticalness of advertisements in the repository 146 and/or relative priorities of advertisements in the repository 146. The advertisement matching engine 144 can use (1700 of Figure 17) the campaign information to generate an ordered list of the pointers to the matching advertisements, and communicate the ordered list to the voice call network node 130.

In some embodiments, the voice call network node 130 (e.g. the advertisement insertion component 134) operates (800 of Figure 8) to cause the voice call handling component 132 to delay placing the voice call to the callee user terminal 112 until after the advertisement is communicated to the caller user terminal 110. For example, the voice call handling component 132 can place (224 of Figure 2) the voice call to the callee user terminal 112 responsive to the advertisement being communicated to the caller user terminal 110. In some other embodiments, the voice call handling component 132 can place the voice call to the callee user terminal 112 before or while the advertisement insertion component 134 is requesting advertisements from the advertisement service offering node 140.

The advertisement insertion component 134 may be configured to respond to the caller user terminal 110 and/or the callee user terminal 112 placing the voice call on hold (e.g., signaling 226' and/or 226" of Figure 2) by communicating (228 of Figure 2) another advertisement to the caller user terminal 110 and/or to the callee user terminal 112. In a further embodiment, the advertisement insertion component 134 responds to the callee user terminal 112 placing the voice call on hold (e.g., by pressing a button on the callee user terminal 112 that triggers signal 226" of Figure 2) by playing an advertisement to the caller user terminal 110 through a voice channel connection, and ceasing playing of the advertisement to the caller user terminal 110 in response to the callee user terminal 112 removing the voice call from hold.

Advertisements may be provided to user terminals via voice, images, and/or video.

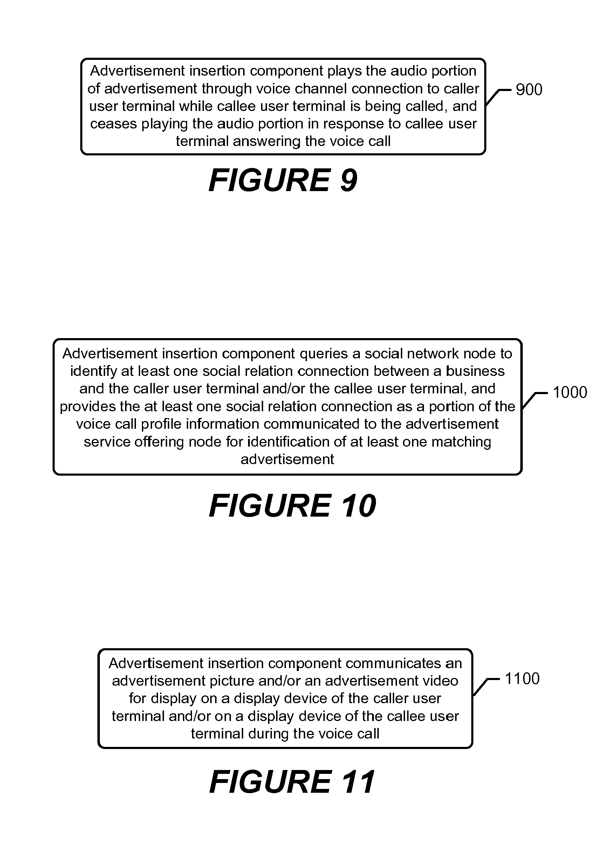

In one embodiment, the advertisement insertion component 134 communicates the advertisement to the caller user terminal 110 by playing (216-218 of Figure 2, 900 of Figure 9) an audio portion of the advertisement (obtained from the repository 146) through a voice channel connection to the caller user terminal 110 while the callee user terminal is being called, and ceases playing the audio portion of the advertisement to the caller user terminal 110 in response to the callee user terminal 112 answering the voice call. Correspondingly, the caller user terminal 110 receives (2000 of Figure 20) the audio advertisement through the voice channel connection to the voice call network node 130, and a processor circuit of the caller user terminal 110 plays (222 of Figure 2, 2002 of Figure 20) the audio advertisement through a speaker.

When an advertisement has not completed being played through the caller user terminal 110 before the callee user terminal 112 answers the call, the remainder of the advertisement may be played through the caller user terminal 110 after the call has ended (e.g., the callee/caller hangs-up). For example, the voice call handling component 132 may respond to the callee hanging-up by maintaining the voice channel connection to the caller user terminal 110 through which the advertisement insertion component 134 can resume playing of the advertisement to the caller user terminal 110. Alternatively, the advertisement insertion component 134 may download the entire advertisement to the caller user terminal 110, such as during call setup and/or during the call, so that the caller user terminal 110 can resume playing the advertisement in response to when the callee and/or caller ends the call.

In another embodiment, the advertisement insertion component 134 communicates the advertisement to the caller user terminal 110 and/or to the callee user terminal 112 by communicating (220 of Figure 2, 1100 of Figure 11) an advertisement picture and/or an advertisement video (obtained from the repository 146) for display on a display device of the caller user terminal 110 and/or on a display device of the callee user terminal 112 during the voice call. Correspondingly, the processor circuit of the caller user terminal 110 and/or callee user terminal 112 receives (1900 of Figure 19) the picture and/or the video advertisement from the voice call network node 130, and displays (222 of Figure 2, 1902 of Figure 19) the picture and/or the video on the display device of the caller user terminal 110 and/or callee user terminal 112. A dialer application, or another associated application, of the caller user terminal 110 may be modified to display pictures/video advertisements to a user while the user is dialing a telephone number and/or during a voice call.

In some further embodiments, advertisements can be selected based on social networking concepts. Referring again to Figure 1, a social network node 150 can be communicatively connected to the voice call network node 130. The social network node 150 can include a repository of information regarding users that can be used by the advertisement insertion component 134 to select targeted advertisements.

In one embodiment, the advertisement insertion component 134 queries (1100 of Figure 11) the social network node 150 to identify at least one social relation connection between a business and the caller user terminal 110 and/or the callee user terminal 112 associated with a voice call, and provides (204 of Figure 2) the at least one social relation connection as a portion of the voice call profile information that is communicated to the advertisement service offering node 140 for identification of at least one matching advertisement.

For example, the repository of information may include user quality ratings of businesses. The advertisement insertion component 134 can use the phone number of the callee user terminal 112 to query the social network node 150 to identify which, if any, businesses the callee has rated (e.g., rated above a certain threshold quality rating level, which may be defined by the caller). The advertisement insertion component 134 can then provide responsive businesses as part of the voice call profile information that is communicated to the advertisement service offering node 140 for identification of at least one matching advertisement. The advertisement insertion component 134 can then provide the received matching advertisements to the caller user terminal 110 so that the caller will receive advertisements that are selected based on the business preferences expressed by the caller through the social network node 150.

### Monetization of Advertisements

Advertisers can pay the provider of the advertisement service offering node 140 for the right to have advertisements provided to users. Telecom operators are, in turn, paid for participating in the provision of advertisements from the advertisement service offering node 140 to user terminals. The telecom operators may discount the voice calling services they provide to subscriber user terminals to encourage acceptability of the advertisements provided to subscriber and/or to encourage subscriber participation when the advertisements are an optional service program. The amount of discount provided to a subscriber may be determined based on the length of advertisement, the number of advertisements, and/or the type of advertisement (e.g., voice, picture, and/or video) that the subscriber allows to be provided through the user terminal. Subscribers may pay the advertisement service offering node 140 to prevent advertisements from being provided when making calls.

The amount that needs to be paid by advertisers may be increased when they desire prioritization of their advertisements over other businesses' advertisements and/or when they want to participate in a short duration and/or dynamically updated advertising campaigning, such as to provide advertising that is customized based on the present location of the advertiser's representatives (e.g., the above described taxi example). A business may pay the advertisement service offering node 140 to prevent competitor advertisements from being provided to callers of the business.

### Example Network Node

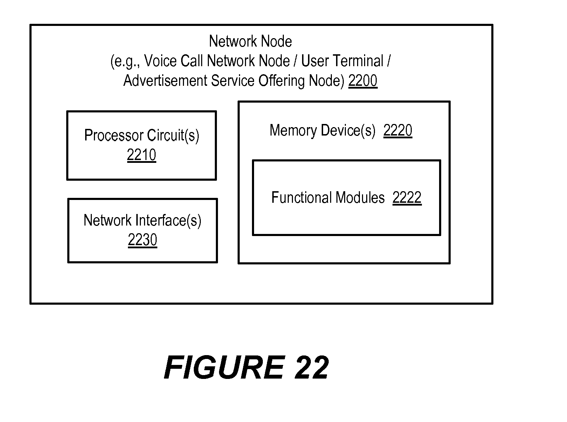

Figure 22 is a block diagram of a network node 2200 configured according to some embodiments of the present invention, and elements of which may be included in one or more of the voice call network node 130, the advertisement service offering node 140, and/or the user terminals 110/112. The network node 2200 can include one or more network interface(s) 2230, processor circuit(s) 2210, and memory device(s) 2200 containing functional modules 2222.

The network interface(s) 2230 is configured to communicate with one or more other network nodes via a wired, optical, and/or wireless communication interface. The processor circuit(s) 2210 may include one or more data processing circuits, such as a general purpose and/or a special purpose processor (e.g., microprocessor and/or digital signal processor). The processor circuit(s) 2210 is configured to execute computer program instructions from the functional modules 2222 of the memory device(s) 2220, described below as a computer readable medium, to perform at least some of the operations and methods described herein as being performed by the voice call network node 130, the advertisement service offering node 140, and/or the user terminals 110/112 in accordance with one or more embodiments disclosed herein.

Further Embodiments and Definitions:

In the above-description of various embodiments of the present invention, it is to be understood that the terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BlueRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks. Accordingly, embodiments of the present invention may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated. Moreover, although some of the diagrams include arrows on communication paths to show a primary direction of communication, it is to be understood that communication may occur in the opposite direction to the depicted arrows.

Many different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of various example combinations and subcombinations of embodiments and of the manner and process of making and using them, and shall support claims to any such combination or subcombination.

Many variations and modifications can be made to the embodiments without substantially departing from the principles of the present invention. All such variations and modifications are intended to be included herein within the scope of the present invention.

## Claims

1. A voice call network node that communicates advertisements to user terminals of a telecommunications system, the voice call network node comprising:
a voice call handling component that responds to a voice call from a caller user terminal by identifying characteristics of the caller user terminal and/or the callee user terminal; and
an advertisement insertion component that:
communicates voice call profile information through a network to an advertisement service offering node, the voice call profile information identifying characteristics of the caller user terminal and/or the callee user terminal;
receives an advertisement from the advertisement service offering node responsive to the communicated voice call profile information; and
communicates the advertisement to the caller user terminal and/or to the callee user terminal.

2. The voice call network node of Claim 1, wherein:
the advertisement insertion component provides a location of the caller user terminal, a location of the callee user terminal, characteristics of a business associated with the caller user terminal, and/or characteristics of a business associated with the callee user terminal as a portion of the voice call profile information communicated to the advertisement service offering node.

3. The voice call network node of Claim 1, wherein:
the advertisement insertion component provides a Web browsing history of the caller user terminal and/or provides a listing of historical calls made from and/or made to the caller user terminal as a portion of the voice call profile information communicated to the advertisement service offering node.

4. The voice call network node of Claim 1, wherein:
the advertisement insertion component responds to individual telephone number digits being dialed by the caller user terminal by identifying a candidate identity of the callee user terminal, and communicating the candidate identity as a portion of the voice call profile information to the advertisement service offering node so that a responsive advertisement is received from the advertisement service offering node for communication to the caller user terminal.

5. The voice call network node of Claim 1, wherein:
the advertisement insertion component communicates the voice call profile information to the advertisement service offering node using an HTTP Representational State Transfer Application Programming Interface, HTTP REST API, of the advertisement service offering node.

6. The voice call network node of Claim 1, wherein:
the advertisement insertion component receives a plurality of pointers to locations of advertisements stored in a memory associated with the advertisement service offering node, and sequentially retrieves the advertisements from the memory using the pointers for communication to the caller user terminal until the voice call is answered by the callee user terminal.

7. The voice call network node of Claim 1, wherein:
the advertisement insertion component causes the voice call handling component to delay placing the voice call to the callee user terminal until after the advertisement is communicated to the caller user terminal.

8. The voice call network node of Claim 1, wherein:
the advertisement insertion component communicates the advertisement to the caller user terminal by playing an audio portion of the advertisement through a voice channel connection to the caller user terminal while the callee user terminal is being called, and ceases playing the audio portion of the advertisement to the caller user terminal in response to the callee user terminal answering the voice call.

9. The voice call network node of Claim 1, wherein:
the advertisement insertion component queries a social network node to identify at least one social relation connection between a business and the caller user terminal and/or the callee user terminal, and provides the at least one social relation connection as a portion of the voice call profile information that is communicated to the advertisement service offering node for identification of at least one matching advertisement.

10. The voice call network node of Claim 1, wherein:
the advertisement insertion component communicates the advertisement to the caller user terminal and/or to the callee user terminal by communicating an advertisement picture and/or an advertisement video for display on a display device of the caller user terminal and/or on a display device of the callee user terminal during the voice call.

11. The voice call network node of Claim 1, wherein:
the advertisement insertion component responds to the caller user terminal and/or the callee user terminal placing the voice call on hold by communicating another advertisement to the caller user terminal and/or to the callee user terminal.

12. The voice call network node of Claim 11, wherein:
the advertisement insertion component responds to the callee user terminal placing the voice call on hold by playing an advertisement to the caller user terminal through a voice channel connection, and ceasing playing of the advertisement to the caller user terminal in response to the callee user terminal removing the voice call from hold.

13. An advertisement service offering node that provides advertisements to voice call network nodes of a telecommunications system, the advertisement service offering node comprising:
a repository of advertisements; and
an advertisement matching engine that receives voice call profile information from a voice call network node that identifies characteristics of a caller user terminal and/or a callee user terminal, uses the voice call profile information to identify at least one matching advertisement in the repository, and communicates the at least one matching advertisement to the voice call network node.

14. The advertisement service offering node of Claim 13, wherein:
the advertisement matching engine uses a location of the caller user terminal, a location of the callee user terminal, characteristics of a business associated with the caller user terminal, and/or characteristics of a business associated with the callee user terminal, which is received as a portion of the voice call profile information, to identify the at least one matching advertisement in the repository.

15. The advertisement service offering node of Claim 14, wherein:
the advertisement matching engine retrieves information identifying locations of businesses associated with the advertisements in the repository, and identifies the at least one matching advertisement responsive to proximetry of the caller user terminal and/or the callee user terminal to the locations of the businesses.

16. The advertisement service offering node of Claim 13, wherein:
the advertisement matching engine uses Web browsing history and/or a listing of historical calls made from and/or made to the caller user terminal, which is received as a portion of the voice call profile information, to identify the at least one matching advertisement in the repository of advertisements.

17. The advertisement service offering node of Claim 13, wherein:
the advertisement matching engine receives the voice call profile information through an HTTP Representational State Transfer Application Programming Interface, HTTP REST API, to the voice call network node.

18. The advertisement service offering node of Claim 13, wherein:
the advertisement matching engine uses the voice call profile information to identify a plurality of matching advertisements in the repository, and communicates to the voice call network node a list of pointers to locations in a memory where the matching advertisements are stored.

19. The advertisement service offering node of Claim 18,
further comprising a campaign server containing campaign information that identifies time criticalness of advertisements in the repository and/or relative priorities of advertisements in the repository, and
wherein the advertisement matching engine uses the campaign information to generate an ordered list of the pointers to the matching advertisements, and communicates the ordered list to the voice call network node.

20. A user terminal comprising:
a communication interface that establishes voice calls through a voice call network node to callee user terminals of a telecommunications system; and
a processor circuit that initiates a voice call to a callee user terminal, receives an advertisement from the voice call network node responsive to initiation of the voice call, and communicates the advertisement to a user.

21. The user terminal of Claim 20, wherein:
the processor circuit receives a picture and/or a video as the advertisement from the voice call network node, and displays the picture and/or the video on a display device.

22. The user terminal of Claim 20, wherein:
the communication interface receives an audio advertisement through a voice channel connection to the voice call network node, and the processor circuit plays the audio advertisement through the speaker.

23. The user terminal of Claim 20,
further comprising an advertisement repository memory;
wherein the processor circuit receives, from the voice call network node, and stores a pre-fetched advertisement in the advertisement repository memory, retrieves the pre-fetched advertisement responsive to a user entering at least a portion of a telephone number to be called for a voice call, and plays an audio portion of the retrieved pre-fetched advertisement through a speaker and/or displays a picture and/or video potion of the retrieved pre-fetched advertisement on a display device.
